# EUROPÄISCHE PATENTSCHRIFT

(11) **EP 3 721 106 B1**
(45) Veröffentlichungstag und Bekanntmachung des Hinweises auf die Patenterteilung: **23.03.2022**
(21) Anmeldenummer: 19700357.7
(22) Anmeldetag: 09.01.2019
(51) Int. Cl.: F16C 19/38, F16C 33/60, F16C 19/50

(54) **MEHRREIHIGES WÄLZLAGER**
MULTI-ROW ROLLING BEARING
PALIER A ROULEMENT A PLUSIEURS RANGÉES

(30) Priorität: 16.01.2018 DE 202018100216 U
(43) Veröffentlichungstag der Anmeldung: 14.10.2020
(73) Patentinhaber: Liebherr-Components Biberach GmbH, 88400 Biberach/Riss (DE)
(72) Erfinder: ZELL, Robert, 88433 Schemmerhofen (DE); RUF, Markus, 88339 Bad Waldsee (DE); FUCHS, Michael, 89542 Herbrechtingen (DE)
(74) Vertreter: Thoma, Michael
(86) Internationale Anmeldenummer: PCT/EP2019/050368
(87) Internationale Veröffentlichungsnummer: WO 2019/141548

(56) Entgegenhaltungen:
- CN-B- 102 734 320
- DE-U1-202010 002 282
- DE-U1-202014 010 876
- US-A- 2 594 578

## Beschreibung

Die vorliegende Erfindung betrifft ein mehrreihiges Wälzlager mit einem Innenring und einem Außenring sowie zumindest zwei Axialwälzlagerreihen zum Abstützen axialer Kräfte zwischen dem Innen- und Außenring, wobei die beiden Axialwälzlagerreihen auf gegenüberliegenden Axialseiten einer radial vorspringenden Ringnase sitzen, die in einer Ringnut eingreift und durch die genannten Axialwälzlagerreihen an der Ringnut abgestützt ist.

Ein Wälzlager nach dem Oberbegriff des Anspruchs 1 ist aus der Schrift CN 102734320 B bekannt. Ähnliche Wälzlager zeigen die Schriften DE 20 2010 002 282 U1, US 2,594,578 A und DE 20 2014 010 876.

Großwälzlager werden regelmäßig in Anwendungen eingesetzt, bei denen hohe Axialkräfte abzufangen sind, die zumindest näherungsweise parallel zur Drehachse des Lagers wirken, während quer zur Drehachse wirkende Radialkräfte nur eine untergeordnete Rolle spielen. Dabei werden solche Großwälzlager oft mittenfrei ausgebildet und ein Ringquerschnitt ist im Vergleich zu dem sehr großen Durchmesser klein, d.h. die Querschnittsdimensionen des Außen- und Innenrings sind im Vergleich zu deren Durchmesser, der mehrere Meter betragen kann, sehr klein. Hierdurch hat die umgebende Anschlusskonstruktion, an der die Innen- und Außenringe befestigt sind, einen großen Einfluss auf das Trag- und Verformungsverhalten des Wälzlagers.

Um bei ungleichmäßig über den Umfang verteilten Axialkräften ein Abheben der Axialwälzlager in einem unbelasteten Sektor zu vermeiden, werden die beiden Ringe in der genannten Weise gerne über eine radial vorspringende Ringnase aneinander abgestützt, wobei die Axialwälzlagerreihen zwischen der Ringnut und der Ringnase auf gegenüberliegenden Axialseiten der Ringnase angeordnet sind, um die genannte Ringnase in beide Richtungen abzustützen. Solche ungleichmäßigen Axialkräfte können beispielsweise bei Kranen oder Baggern entstehen, deren Oberwagen über ein solches Großwälzlager drehbar am Unterwagen gelagert ist, wobei hier einer der genannten Innen- und Außenringe mit einer Verzahnung versehen sein kann, um einen Drehantrieb in das Großwälzlager zu integrieren. Durch die auf den Oberwagen wirkenden Kippmomente wird die Drehverbindung über den Umfang betrachtet sehr unterschiedlich belastet, wobei beispielsweise in einem Sektor stark nach unten drückende Axialkräfte und in einem gegenüberliegenden Sektor nach oben ziehende Axialkräfte wirken können.

Auch wenn solche Axialkräfte durch die zumindest zwei Axialwälzlagerreihen, die auf gegenüberliegenden Seiten der Ringnase angreifen, abgefangen werden können, ist es sinnvoll, auch ein Abtragen radialer Belastungen sicherzustellen bzw. radialen Bewegungen der Innen- und Außenringe relativ zueinander entgegenzuwirken. Solche Radialbewegungen können sich zum einen durch hinzukommende Radialbelastungen ergeben, aber auch durch Verformungen der Lagerringe entstehen, insbesondere bei nachgiebigeren Anschlusskonstruktionen. Beispielsweise können sich die Innen- und Außenringe in einem Sektor anzunähern versuchen, d.h. die Ringnase würde tiefer in die Ringnut eindringen wollen, während in einem gegenüberliegenden Sektor ein Auseinanderlaufen der Ringe drohen kann, d.h. die Ringnase würde versuchen, sich ein Stück weit aus der Ringnut herauszubewegen.

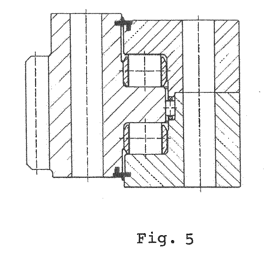

Um solche möglichen Radialbewegungen zu verhindern bzw. Radialkräfte abzufangen, ist es deshalb bekannt, zwischen der Ringnase und der Ringnut eine Radiallagerreihe vorzusehen, die die vorspringende Stirnseite der Ringnase am Boden der Ringnut abstützt, wie dies beispielsweise Fig. 5 zeigt. Sind größere Radiallasten abzutragen oder treten aufgrund hoher, ungleichmäßiger Lasten stärkere Verformungen auf, ist ein einzelnes Radiallager bisweilen nicht mehr ausreichend, um Verformungen der Lagerringe zu verhindern und einem Annähern bzw. Entfernen der Innen- und Außenringe ausreichend entgegenzuwirken. In der Schrift DE 10 2006 054453 B4 wird deshalb vorgeschlagen, den Nasenring mit zwei Radiallagern, die auf gegenüberliegenden Seiten des Nasenrings angeordnet sind, radial abzustützen. Solche mehreren Radiallagerreihen auf gegenüberliegenden Seiten der Ringnase machen die Drehverbindung insgesamt relativ sperrig und vergrößern deren Bauabmessungen. Insbesondere bei Großwälzlagern, bei denen ein Ring mit einer Verzahnung für einen Drehantrieb versehen ist, wäre es jedoch wichtig, Platz sparend zu bauen.

Der vorliegenden Erfindung liegt die Aufgabe zugrunde, ein verbessertes mehrreihiges Großwälzlager zu schaffen, das Nachteile des Standes der Technik vermeidet und Letzteren in vorteilhafter Weise weiterbildet. Insbesondere sollen radiale Verformungen und Bewegungen der Ringe relativ zueinander auch bei starken Belastungen verhindert und Radialkräfte abgefangen werden, ohne dies durch eine sperrige, groß bauende Ausbildung des Wälzlagers mit erhöhten Querschnittsdimensionen der Lagerringe zu erkaufen.

Erfindungsgemäß wird die genannte Aufgabe durch ein mehrreihiges Wälzlager gemäß Anspruch 1 gelöst. Bevorzugte Ausgestaltungen der Erfindung sind Gegenstand der abhängigen Ansprüche.

Es wird also vorgeschlagen, zumindest einen Teil der Radialkräfte und -verformungen über die Axialwälzlagerreihen abzufangen, die so ausgebildet werden, dass sie auch Radialkräfte und -verformungen abtragen können. Erfindungsgemäß ist zumindest eine der Axialwälzlagerreihen als Schrägrollenlager mit einem Schrägstellungswinkel von größer 0° bis maximal 45° ausgebildet. Ein solcher, vorzugsweise relativ geringer Schrägstellungswinkel von beispielsweise 5° bis 30° oder 10° bis 25° verringert die axiale Tragfähigkeit, die an sich weiterhin im Vordergrund steht, kaum merklich, während gleichzeitig die bei bestimmten Lastfällen auftretenden Radialkräfte und -verformungen ausreichend abgefangen werden können, so dass zumindest keine zweite Radiallagerreihe notwendig wird. Hierdurch kann das Lager trotz ausreichender Radialtragfähigkeit klein bauend und kompakt ausgebildet werden. Insbesondere erhöht sich die Bauhöhe nicht und es bleibt ausreichend Bauraum für die Anschlussumgebung, insbesondere für Drehantriebe, wenn einer der Ringe mit einer Verzahnung für einen Drehantrieb versehen ist.

Erfindungsgemäß sind beide Axialwälzlagerreihen, die auf gegenüberliegenden Axialseiten der Ringnase angeordnet sind, als Schrägrollenlager ausgebildet und können näherungsweise betragsmäßig den gleichen Schrägungswinkel besitzen.

Alternativ, nicht im Rahmen der Erfindung, kann auch nur eine der beiden Axialwälzlagerreihen als Schrägrollenlager ausgebildet sein, während das andere der beiden Axialwälzlager ein reines Axiallager bilden kann, wobei in diesem Fall vorzugsweise ein zusätzliches Radiallager helfen kann, Radialkräfte abzufangen.

Gemäß der Erfindung sind die zumindest zwei Axialwälzlagerreihen derart schräg gestellt, dass die beiden Axialwälzlagerreihen einem Entfernen der Ringnase aus der Ringnut heraus entgegenwirken. Hierbei können die Laufbahnen für die Wälzkörper der Axialwälzlagerreihen auf gegenüberliegenden Axialseiten der Ringnase derart schräg gestellt sein, dass sich die Ringnase - im Querschnitt betrachtet - zum Boden der Ringnut hin verbreitert. Die Ringnase spreizt sich sozusagen zum Boden der Ringnut hin auf.

Bei einer solchen Schrägstellung der Axialwälzlagerreihen, die eine Aufweitung der Lagerringe verhindert, ist gemäß der Erfindung zusätzlich ein Radiallager vorgesehen, das einer Annäherung der Innen- und Außenringe entgegenwirkt. Ein solches zusätzliches Radiallager kann insbesondere zwischen der vorspringenden Stirnseite der Ringnase und dem Boden der Ringnut angeordnet sein. Vorteilhafterweise besitzt das Wälzlager nur die eine Radiallagerreihe. Hierdurch kann eine kompakte Bauweise sichergestellt werden.

Die schräg gestellten Axialwälzlager können jeweils einreihig oder mehrreihig ausgebildet sein. Bei einer mehrreihigen Ausbildung können zwei oder auch mehrere Reihen von Wälzkörpern nebeneinander auf derselben Axialbahn abwälzen oder auch auf separaten Axialbahnen laufen.

Bei der genannten mehrreihigen Ausbildung der Axialwälzlager können die nebeneinander angeordneten Wälzkörperreihen die gleiche Schrägstellung aufweisen bzw. auf zueinander parallel ausgerichteten, schräg gestellten Axialbahnen abwälzen, wobei vorteilhafterweise die Axialbahnen auf gegenüberliegenden Axialseiten der Ringnase zueinander gegenläufig orientiert sind, um in der beschriebenen Weise einer Annäherung der Innen- und Außenringe bzw. einem Auseinanderlaufen der Innen- und Außenringe entgegenzuwirken.

Alternativ wäre es aber auch möglich, auf zumindest einer Axialseite, vorzugsweise auf jeder der gegenüberliegenden Axialseiten der Ringnase zwei schräg gestellte Axialwälzlagerreihen anzuordnen, die zueinander gegenläufig schräg gestellt sind, so dass die eine schräg gestellte Wälzkörperreihe einer Annäherung der Innen- und Außenringe entgegenwirkt und die andere Wälzkörperreihe einem Auseinanderlaufen der Innen- und Außenringe entgegenwirkt.

Der Schrägstellungswinkel kann dabei je nach Anwendung innerhalb des genannten Bereichs verschieden gewählt werden, wobei eher größere Schrägungswinkel gewählt werden, um stärkere Radialkräfte aufzunehmen und eher kleinere Schrägungswinkel gewählt werden, um geringere Einbußen bei der axialen Tragfähigkeit zu haben. In vorteilhafter Weiterbildung der Erfindung können die Axialbahnen der Axialwälzlagerreihen einen Schrägstellungswinkel von weniger als 10° aufweisen, insbesondere im Bereich von 1° bis 10°, wobei eine günstige Allround-Konfiguration mit einem Schrägstellungswinkel von 2° bis 8° oder 3° bis 7° erzielt werden kann.

Für Anwendungen, bei denen beispielsweise aufgrund nachgiebigerer Anschlusskonstruktionen oder stärkerer Biegebelastungen des Lagers Ringverformungen und Radialbelastungen im Vordergrund stehen, während die axiale Tragfähigkeit weniger im Fokus steht, können die Axialwälzlagerreihen auch einen größeren Schrägstellungswinkel aufweisen, beispielsweise im Bereich von 10° bis 35° oder im Bereich von 15° bis 30°, wobei jedoch generell auch Schrägstellungswinkel von bis zu 45° in Betracht kommen können.

Vorteilhafterweise können die Axialbahnen an der Ringnase und die Axialbahnen an den Seitenflanken der Ringnut jeweils denselben Schrägstellungswinkel aufweisen, wobei zumindest zusammengehörige Axialbahnen an der Ringnase und der Ringnut, auf denen derselbe Wälzkörper abrollt, denselben Schrägstellungswinkel besitzen können, während die Axialbahnen auf unterschiedlichen Seiten der Ringnase, also beispielsweise die Ringnasen- und Ringnutaxialbahnen auf einer Oberseite einerseits und die Ringnasen- und Ringnutaxialbahnen auf einer Unterseite der Ringnase andererseits verschiedene Schrägstellungswinkel aufweisen können.

In vorteilhafter Weiterbildung der Erfindung können aber auch alle Axialbahnen an der Ringnase und der Ringnut betragsmäßig denselben Schrägstellungswinkel besitzen.

Die Wälzkörper sind in vorteilhafter Weiterbildung der Erfindung als Zylinderrollen ausgebildet. Grundsätzlich käme es auch in Betracht, Kegelrollen vorzusehen. Um besonders hohe Tragfähigkeiten zu erzielen, können aber Zylinderrollen in der genannten Weise schräg angestellt werden und die Axialwälzlagerreihen bilden.

Um besonders kompakt zu bauen, kann es vorteilhaft sein, wenn die Innen- und Außenringe durch insgesamt genau zwei Axiallagerreihen gegeneinander abgestützt sind, die auf gegenüberliegenden Seiten der Ringnase angeordnet sind. Ist ein zusätzliches Radiallager vorgesehen, können die Innen- und Außenringe durch insgesamt drei Lagerreihen umfassend die genannten zwei Axiallagerreihen und eine Radiallagerreihe gegeneinander abgestützt sein. Ist in der vorgenannten Weise kein Radiallager vorgesehen, können die beiden genannten Axiallager die einzigen Lagerreihen bilden.

Die zumindest zwei Axialwälzlagerreihen, die auf gegenüberliegenden Axialseiten der Ringnase liegen, können in Weiterbildung der Erfindung zumindest näherungsweise denselben Durchmesser aufweisen und/oder in axialer Richtung miteinander fluchtend auf der genannten Ringnase angeordnet sein. Grundsätzlich wäre es denkbar, die beiden Lagerreihen zueinander versetzt bzw. auf verschiedenen Teilkreisdurchmessern anzuordnen. Um eine symmetrische Kraft- und Momentenabtragung auch bei unterschiedlichen Drehrichtungen der Kippmomente zu erzielen, kann es jedoch vorteilhaft sein, die Axialwälzlagerreihen symmetrisch verteilt anzuordnen.

Vorteilhafterweise können die genannten Axialwälzlagerreihen zumindest näherungsweise gleich groß dimensioniert sein, insbesondere Zylinderrollen gleichen Durchmessers und/oder gleicher Breite besitzen, und/oder auch hinsichtlich ihrer Druckwinkel zueinander näherungsweise identisch ausgebildet sein.

Die Laufbahnen der genannten Axialwälzlagerreihen und ggf. auch die Laufbahnen der optionalen Radialwälzlagerreihe können vorteilhafterweise integral einstückig, materialhomogen an den Außen- und Innenringen ausgebildet sein, insbesondere an den Axialseiten der vorgenannten Ringnase und den seitlichen Flanken der genannten Ringnut. Insbesondere kann auf Laufbahneinsätze wie Lagerdrähte und dergleichen verzichtet sein.

Von den genannten Innen- und Außenringen kann zumindest einer mehrteilig, insbesondere zweiteilig ausgebildet sein, wobei vorteilhafterweise der Ring zweigeteilt oder mehrgeteilt ausgebildet ist, der die genannte Ringnut aufweist. Eine Teilungsebene kann sich hierbei vorteilhafterweise zumindest näherungsweise senkrecht zur Drehachse des Wälzlagers erstrecken und/oder im Bereich des Bodens der Ringnut die genannten Ringnut teilen.

Der die Ringnase aufweisende Lagerring kann vorteilhafterweise einstückig ausgebildet sein, wobei aber auch hier eine mehrteilige Ausbildung möglich ist, insbesondere dann, wenn beispielsweise eine Verzahnung an den Ring angeformt ist, wobei eine solche Verzahnung aber auch integral einstückig angeformt sein kann.

Vorteilhafterweise kann die Ringnase am Außenring vorgesehen und die Ringnut am Innenring vorgesehen sein, vorteilhafterweise dann, wenn am Außenring eine Verzahnung für einen Drehantrieb vorgesehen ist. Grundsätzlich wäre es aber in alternativer Ausbildung der Erfindung auch möglich, die Ringnase am Innenring und die Ringnut am Außenring anzubringen.

Die Erfindung wird nachfolgend anhand von Ausführungsbeispielen und zugehöriger Zeichnungen näher erläutert. In den Zeichnungen zeigen:

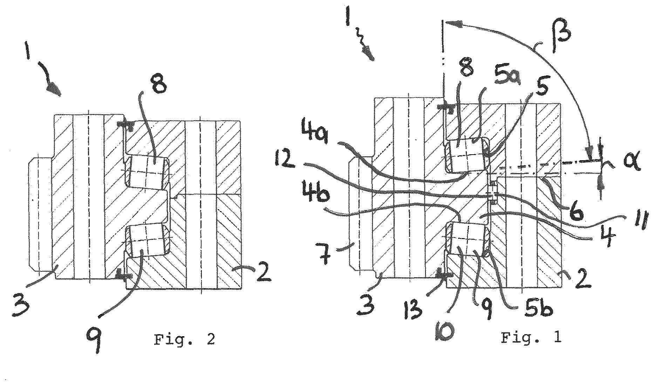

- Fig. 1:: eine Teilschnittansicht eines Wälzlagers nach einer Ausführungsform der Erfindung, bei der zwei Axialwälzlagerreihen derart schräg gestellt sind, dass die Axialwälzlagerreihen einem radialen Entfernen der beiden Lagerringe entgegenwirkt, wobei ein zusätzliches Radiallager einem Annähern der Lagerringe entgegenwirkt,
- Fig. 2:: eine Teilschnittansicht eines Wälzlagers nach einem nicht zu Erfindung gehörigen Vergleichsbeispiel, bei dem zwei Axialwälzlagerreihen derart schräg gestellt sind, dass die Axialwälzlagerreihen einem radialen Annähern der beiden Lagerringe entgegenwirken, wobei gänzlich auf ein zusätzliches Radiallager verzichtet ist,

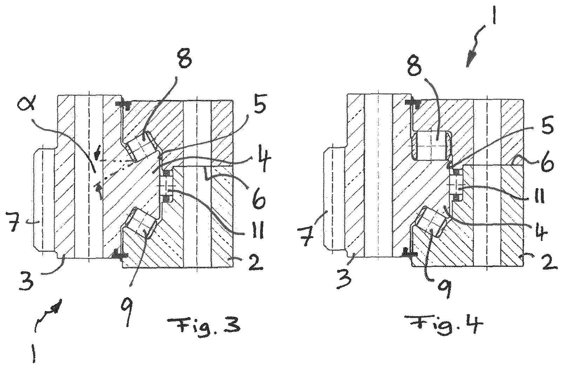

- Fig. 3:: eine Teilschnittansicht eines Wälzlagers ähnlich Figur 1 nach einer weiteren Ausführung der Erfindung, bei der die zwei Axialwälzlagerreihen schräger als in Figur 1 angestellt sind,
- Fig.4:: eine Teilschnittansicht eines Wälzlagers ähnlich den Figuren 1 und 3**,** jedoch nicht Teil der Erfindung, bei der nur eine der Axialwälzlagerreihen schräg angestellt ist, um einem radialen Entfernen der beiden Lagerringe entgegen zu wirken, während das andere Axialwälzlager als reines Axialwälzlager ohne Schrägstellung ausgebildet ist, und
- Fig. 5:: eine Teilschnittansicht eines herkömmlichen, nicht schräg gestellten Wälzlagers in dreireihiger Bauweise.

Wie die Figuren zeigen, umfasst das Wälzlager 1 einen Innenring 2 sowie einen Außenring 3, die durch mehrere Wälzlagerreihen gegeneinander verdrehbar abgestützt sind, wobei die genannten Wälzlagerreihen zwischen einer radial vorspringenden Ringnase 4 und einer Ringnut 5, in die die genannte Ringnase 4 eingreift, angeordnet sein können.

Wie Fig. 1 zeigt, kann die genannte Ringnase 4 am Außenring 3 vorgesehen sein und vom Innenumfang des Außenrings 3 radial nach innen vorspringen, wobei in diesem Fall die Ringnut 5 an dem Innenring 2 vorgesehen sein und in dessen Außenumfang ausgebildet sein kann. Unabhängig vom Vorsehen am Innen- oder Außenring kann die Ringnase 4 etwa mittig auf halber Höhe des jeweiligen Lagerrings vorgesehen sein, was auch für die Ringnut 5 am jeweils anderen Lagerring gelten kann.

Wie die Figuren zeigen, kann der die Ringnut 5 aufweisende Lagerring - im Falle der Fig. 1 der Innenring 2 - geteilt ausgebildet sein, wobei die Teilungsebene 6 näherungsweise senkrecht zur Drehachse des Wälzlagers 1 ausgerichtet und/oder sich durch den Boden der Ringnut 5 erstrecken kann. Vorteilhafterweise erstreckt sich dabei die Teilungsebene 6 bezüglich des Bodens der Ringnut 5 außermittig, beispielsweise bei etwa einem Drittel oder zwei Drittel der Höhe bzw. Breite der Ringnut 5, um einerseits nicht im Bereich der Axialwälzlager und andererseits nicht im Bereich eines etwaigen Radiallagers zu liegen.

Der die Ringnase 4 aufweisende Lagerring - im Falle der Zeichnungen der Außenring 3 - kann einstückig ausgebildet sein und ggf. einen Verzahnungsabschnitt 7 aufweisen, an dem das Ritzel eines Drehantriebs eines Drehwerks angreifen kann. Beispielsweise kann der genannte Verzahnungsabschnitt 7 an der Außenumfangsseite des Außenrings 3 vorgesehen sein.

Wie die Figuren zeigen, kann das Wälzlager 1 zwei Axialwälzlagerreihen 8 und 9 aufweisen, die auf gegenüberliegenden Axialseiten der genannten Ringnase 4 angeordnet sein und die Ringnase 4 an den Flanken der Ringnut 5 abstützen können. Die genannten Axialwälzlagerreihen 8 und 9 sind dabei vorteilhafterweise beide als Schrägrollenlager mit einem Schrägstellungswinkel im Bereich von größer 0° bis maximal 45° ausgebildet, wobei der genannte Schrägstellungswinkel α vorteilhafterweise im Bereich von größer 10° bis 30° oder 15° bis 25° betragen kann.

Die Wälzkörper 10 der genannten Schrägrollenlager sind dabei vorteilhafterweise Zylinderrollen, die auf schräg angestellten Axialbahnen 4a und 4b an der Ringnase 4 und Axialbahnen 5a und 5b an der Ringnut 5 laufen. Die genannten Axialbahnen 4a und 4b der Ringnase 4 und die Axialbahnen 5a und 5b an den Seitenflanken der Ringnut 5 können in derselben Weise schräg gestellt sein, d.h. denselben Schrägstellungswinkel α besitzen, der gegenüber einer Ebene senkrecht zur Drehachse des Wälzlagers 1 gemessen werden kann.

Die genannten Zylinderrollen können dabei grundsätzlich verschieden bemessen sein, wobei es vorteilhaft sein kann, wenn der Zylinderdurchmesser etwa näherungsweise der Zylinderbreite, beispielsweise 75% bis 150% der Zylinderbreite, beträgt, wobei aber auch andere Zylindergeometrien gewählt werden können.

Wie die Figuren zeigen, können die genannten Axialwälzlagerreihen 8 und 9 in Axiallagerrichtung betrachtet fluchtend zueinander ausgerichtet bzw. auf denselben Teilkreisdurchmessern angeordnet sein.

Wie die Figuren zeigen, kann der Winkel β zwischen der jeweiligen Axialbahn 4a, 4b bzw. 5a, 5b und der seitlichen Anlauffläche für die Wälzkörper 10 vorteilhafterweise 90° oder kleiner ausgebildet sein und/oder unabhängig vom Schrägstellungswinkel α der Axialbahn gewählt sein. In Fig. 1 ist der besagte Winkel β für eine Laufbahn 4a der Ringnase 4 und eine zugehörige seitliche Anlauffläche des Außenrings 3 eingetragen. Analog kann der Winkel β aber auch zwischen einer ringnutseitigen Axialbahn 5a bzw. 5b und der zugehörigen seitlichen Anlauffläche des Innenrings 2 gewählt sein.

Wie Fig. 1 und 3 zeigen, können die Axialwälzlagerreihen 8 und 9 derart schräg gestellt bzw. der Winkel α derart orientiert sein, dass die Axialwälzlagerreihen 8 und 9 einem Entfernen der Ringnase 4 aus der Ringnut 5 heraus entgegenwirken. Insbesondere kann sich die Ringnase 4 durch die Schrägstellung der Axialbahnen 4a und 4b zum Boden der Ringnut 5 hin aufspreizen, so dass die Axialwälzlagerreihen 8 und 9 die Ringnase 4 in der Ringnut 5 halten und einem Auseinanderlaufen von Innenring 2 und Außenring 3 entgegenwirken.

Wie Fig. 1 zeigt, kann jede der Axialwälzlagerreihen 8 und 9 einen Schrägstellungswinkel α von beispielsweise etwa 5° aufweisen. Alternativ zeigt Fig. 3 eine Ausführungsform mit stärker schräg gestellten Axialwälzlagerreihen 8 und 9, wobei hier der Schrägstellungswinkel α beispielsweise 30° betragen kann.

Um auch einem Annähern des Außenrings 3 an den Innenring 2, d.h. einem tieferen Eintauchen der Ringnase 4 in die Ringnut 5 hinein, entgegenzuwirken, kann das Wälzlager 1 zusätzlich zu den beiden Axialwälzlagerreihen 8 und 9 eine Radialwälzlagerreihe 11 aufweisen, die vorteilhafterweise zwischen der Stirnseite der Ringnase 4 und dem Boden der Ringnut 5 angeordnet sein kann, insbesondere etwa mittig zwischen den beiden Axialwälzlagerreihen 8 und 9. Die genannte Radialwälzlagerreihe 11 kann hierbei ebenfalls Zylinderrollen aufweisen, ggf. aber auch anders geformte Wälzkörper besitzen.

Vorteilhafterweise sind die Wälzkörper 12 der Radialwälzlagerreihe 11 deutlich kleiner dimensioniert als die Wälzkörper 10 der Axialwälzlagerreihen 8 und 9. Beispielsweise kann der Durchmesser der Wälzkörper 12 der Radialwälzlagerreihe 11 weniger als 50% oder weniger als 30% des Durchmessers der Wälzkörper 10 der Axialwälzlagerreihen 8 und 9 betragen.

Wie Figur 4 zeigt, kann gegebenenfalls auch nur eine Axialwälzlagerreihe 9 schräggestellt sein, beispielsweise unter einem Schrägstellungswinkel α im Bereich von 5° bis 45° oder 10° bis 35° oder 15° bis 30°, beispielsweise 30°. Die andere Axialwälzlagerreihe 8 kann ein reines Axiallager bilden und/oder ohne Schrägung ausgebildet sein, sodass die Hauptabtragsrichtung dieser zweiten Axialwälzlagerreihe 8 in Axialrichtung verläuft.

Bei einer solchen Ausführungsform ( nicht Teil der Erfindung) mit nur einer schräggestellten Axialwälzlagerreihe 9 kann in der vorbeschriebenen Weise die Schrägstellung derart beschaffen sein, dass einem Entfernen der Ringnase 4 aus der Nut entgegengewirkt wird. Um auch einem Annähern bzw. Eintauchen entgegen zu wirken, kann in der vorbeschriebenen Weise ebenfalls ein Radiallager 11 Verwendung finden, welches vorteilhafterweise bei Betrachtung in Radialrichtung zwischen den beiden Axiallagerreihen 8 und 9 angeordnet sein kann, vgl. Fig. 4. Bei der Ausführungsform gemäß Fig. 2 sind die genannten Axialwälzlagerreihen 8 und 9 im Vergleich zu Fig. 1 sozusagen umgekehrt schräg gestellt, so dass die Axialwälzlagerreihen 8 und 9 nicht einem Auseinanderlaufen, sondern einem Annähern der Innen- und Außenringe 2 und 3 entgegenwirken, d.h. die Axialwälzlagerreihen 8 und 9 wirken einem tieferen Eintauchen der Ringnase 4 in die Ringnut 5 entgegen. Wie Fig. 2 zeigt, können die Axialbahnen 4a und 4b an der Ringnase 4 derart schräg gestellt sein, dass sich die Ringnase 4 im Bereich der besagten Axialbahnen 4a und 4b zum Boden der Ringnut 5 hin verjüngt.

Da ein Annähern des Außenrings 3 an den Innenring 2 durch die Schrägstellung der Axialwälzlagerreihen 8 und 9 auch in radialer Richtung verhindert wird, kann bei der Ausführung nach Fig. 2 gänzlich auf ein zusätzliches Radiallager verzichtet werden, so dass das Wälzlager 1 insgesamt nur zweireihig ausgebildet ist und sämtliche Axial- und Radialkräfte nur durch die beiden genannten Axialwälzlagerreihen 8 und 9 aufgefangen werden.

Hinsichtlich der übrigen Ausbildung der Innen- und Außenringe 2 und 3, der Schrägstellung der Axialbahnen 4a, 4b und 5a, 5b, der Ausbildung der Wälzkörper 10 und der genannten Winkel α und β darf im Übrigen auf die Beschreibung der Fig. 1 und 3 verwiesen werden, die insoweit auch für die Fig. 2 gilt.

Auch wenn dies nicht eigens gezeigt ist, kann bei der Ausführungsform nach Fig. 2 der Schrägungswinkel α gegebenenfalls stärker gewählt werden, beispielsweise etwa 30°. Dabei kommt es auch in Betracht, nur eine der beiden Axialwälzlagerreihen schräg zu stellen, während die andere der beiden Axialwälzlagerreihen keine Schrägstellung aufweisen kann bzw. als reines Axiallager ausgebildet sein kann.

Im Vergleich zu den Figuren 1 und 2 zeigt die Fig. 5 ein an sich herkömmliches Wälzlager 1 mit nicht schräg gestellten Axialwälzlagern.

Sämtliche Wälzlager 1 gemäß Fig. 1 oder Fig. 2 können durch eine Dichtung 13 im Bereich des Spalts zwischen den beiden Innen- und Außenringen 2 und 3 abgedichtet sein.

Der Innenring 2 und/oder der Außenring 3 können jeweils segmentiert ausgebildet sein.

## Patentansprüche

1. Mehrreihiges Wälzlager, insbesondere mittenfreies Großwälzlager, mit einem Innenring (2) und einem Außenring (3) sowie zumindest zwei Axialwälzlagerreihen (8, 9) zum Abstützen axialer Kräfte zwischen Innen- und Außenring, wobei die beiden Axialwälzlagerreihen (8, 9) auf gegenüberliegenden Axialseiten einer radial vorspringenden Ringnase (4) sitzen, die in eine Ringnut (5) eingreift und durch die genannten Axialwälzlagerreihen (8, 9) an der Ringnut (5) abgestützt ist, wobei beide Axialwälzlagerreihen (8, 9) als Schrägrollenlager mit einem Schrägstellungswinkel (a) von größer 0° bis maximal 45° ausgebildet sind, **dadurch gekennzeichnet, dass** die Axialwälzlagerreihen (8, 9) derart schräg gestellt sind, dass die Axialwälzlagerreihen (8, 9) einem radialen Entfernen der Ringnase (4) aus der Ringnut (5) heraus entgegenwirken, wobei ein separates Radiallager (11), das einem radialen Annähern des Außenrings (3) an den Innenring (2) entgegenwirkt, zwischen einer Stirnseite der Ringnase (4) und einem Boden der Ringnut (5) etwa mittig zwischen den Axialwälzlagerreihen (8, 9) angeordnet ist.

2. Mehrreihiges Wälzlager nach dem vorhergehenden Anspruch, wobei der genannte Schrägstellungswinkel (a) im Bereich von größer 0° bis maximal 10° oder im Bereich von 1° bis 8° ausgebildet ist.

3. Mehrreihiges Wälzlager nach Anspruch 1, wobei der genannte Schrägungswinkel (a) im Bereich von 10° bis 35° oder 15° bis 30° ausgebildet ist.

4. Mehrreihiges Wälzlager nach einem der vorhergehenden Ansprüche, wobei beide oder alle Axialwälzlagerreihen (8, 9) als Schrägrollenlager mit betragsmäßig gleichen Schrägungswinkeln (a) ausgebildet sind.

5. Mehrreihiges Wälzlager nach einem der vorhergehenden Ansprüche, wobei genau eine Radiallagerreihe (11) vorgesehen ist.

6. Mehrreihiges Wälzlager nach einem der vorhergehenden Ansprüche, wobei die Wälzkörper (10) der Axialwälzlagerreihen (8, 9) als Zylinderrollen ausgebildet sind, wobei die Axialwälzlagerreihen (8, 9) axial fluchtend zueinander angeordnet sind und/oder denselben Lagerdurchmesser besitzen, und Wälzkörper (10) desselben Durchmessers besitzen und betragsmäßig dieselben Druckwinkel aufweisen.

7. Mehrreihiges Wälzlager nach einem der vorhergehenden Ansprüche, wobei ein Winkel (β) zwischen einer Axiallauffläche (4a, 4b; 5a, 5b) an der Ringnase (4) oder der Ringnut (5) und einer angrenzenden seitlichen Anlauffläche für die Wälzkörper (10) der Axialwälzlagerreihen (8, 9) 90° oder weniger beträgt.

8. Mehrreihiges Wälzlager nach einem der vorhergehenden Ansprüche, wobei zumindest einer der genannten Innen- oder Außenringe (2, 3) mit einer Verzahnung (7) versehen ist, wobei insbesondere der die Ringnase (6) aufweisende Lagerring die genannte Verzahnung (8) aufweist.

9. Mehrreihiges Wälzlager nach einem der vorhergehenden Ansprüche, wobei die Ringnase (4) am Außenring (3) vorgesehen und die Ringnut (5) am Innenring (2) vorgesehen ist.

10. Mehrreihiges Wälzlager nach einem der vorhergehenden Ansprüche, wobei der die Ringnut (5) aufweisende Lagerring zwei- oder mehrteilig ausgebildet ist und eine Teilungsebene (6) besitzt, die sich etwa senkrecht zur Drehachse des Wälzlagers erstreckt und die Ringnut (5) im Bereich des Bodens der Ringnut (5) teilt.

11. Mehrreihiges Wälzlager nach einem der vorhergehenden Ansprüche, wobei das Wälzlager (1) als Großwälzlager mit einem Ringdurchmesser von mehr als 1 m oder mehr als 2,5 m oder mehr als 4 m ausgebildet ist.

12. Mehrreihiges Wälzlager nach einem der vorhergehenden Ansprüche, wobei zumindest einer der Innen- und Außenringe (2; 3) segmentiert ausgebildet ist.

13. Baumaschine, insbesondere Kran oder Bagger, mit einem mehrreihigen Wälzlager (1), das gemäß einem der vorhergehenden Ansprüche ausgebildet ist.

14. Baumaschine nach dem vorhergehenden Anspruch, wobei das mehrreihige Wälzlager (1) eine Drehbühne der Baumaschine um eine aufrechte Achse drehbar an einem Unterwagen der Baumaschine lagert.

15. Windkraftanlage mit einem Rotor, der mehrere an einer Nabe verstellbar gelagerte Rotorblätter aufweist, wobei zumindest ein mehrreihiges Wälzlager (1), das gemäß einem der vorhergehenden Ansprüche ausgebildet ist, zum Lagern eines Rotorblatts an der Nabe oder zum Lagern der Nabe an einer Gondel der Windkraftanlage vorgesehen ist.

## Claims

1. A multirow roller bearing, in particular an open centered large roller bearing, having an inner ring (2) and an outer ring (3) as well as at least two axial roller bearing rows (8, 9) for supporting axial forces between the inner and outer rings, wherein the two axial roller bearing rows (8, 9) are seated on oppositely disposed axial sides of a radially projecting ring nose (4) that engages in a ring groove (5) and that is supported by said axial roller bearing rows (8, 9) at the ring groove (5), wherein both axial roller bearing rows (8, 9) are formed as taper roller bearings having an inclination angle (a) of more than 0° to a maximum of 45°,
**characterized in that**
the axial roller bearing rows (8, 9) are inclined such that the axial roller bearing rows (8, 9) counteract a radial moving away of the ring nose (4) from the ring groove (5), with a separate radial bearing (11) that counteracts a radial moving in of the outer ring (3) toward the inner ring (2) being arranged between an end face of the ring nose (4) and a base of the ring groove (5) approximately centrally between the axial roller bearing rows (8, 9).

2. A multirow roller bearing in accordance with the preceding claim, wherein said inclination angle (a) is formed in the range from more than 0° to a maximum of 10° or in the range from 1° to 8°.

3. A multirow roller bearing in accordance with claim 1, wherein said inclination angle (a) is formed in the range from more than 10° to 35° or in the range from 15° to 30°.

4. A multirow roller bearing in accordance with one of the preceding claims, wherein both or all of the axial roller bearing rows (8, 9) are formed as taper roller bearings having inclination angles (a) of the same amount.

5. A multirow roller bearing in accordance with one of the preceding claims, wherein exactly on roller bearing is provided.

6. A multirow roller bearing in accordance with one of the preceding claims, wherein the rolling elements (10) of the axial roller bearing rows (8, 9) are formed as cylinder rollers, wherein the axial roller bearing rows (8, 9) are arranged axially aligned with one another and/or have the same bearing diameter, and have rolling elements (10) of the same diameter and have the same pressure angle. amount.

7. A multirow roller bearing in accordance with one of the preceding claims, wherein an angle (β) between an axial running surface (4a, 4b; 5a, 5b) at the ring nose (4) or at the ring groove (5) and an adjacent lateral run-on surface for the rolling elements (10) of the axial roller bearing rows (8, 9) amounts to 90° or less.

8. A multirow roller bearing in accordance with one of the preceding claims, wherein at least one of said inner or outer rings (2, 3) is provided with a toothed portion (7), with in particular the bearing ring having the ring nose (6) having said toothed portion (8).

9. A multirow roller bearing in accordance with one of the preceding claims, wherein the ring nose (4) is provided at the outer ring and the ring groove (5) is provided at the inner ring (2).

10. A multirow roller bearing in accordance with one of the preceding claims, wherein the bearing ring having the ring groove (5) is formed in two or more parts and has a dividing plane (6) that extends approximately perpendicular to the axis of rotation of the roller bearing and divides the ring groove (5) in the region of the base of the ring groove (5).

11. A multirow roller bearing in accordance with one of the preceding claims, wherein the roller bearing (1) is formed as a large roller bearing having a ring diameter of more than 1 m or more than 2.5 m or more than 4 m.

12. A multirow roller bearing in accordance with one of the preceding claims, wherein at least one of the inner and outer rings (2, 3) is formed as segmented.

13. A construction machine, in particular a crane or an excavator, comprising a multirow roller bearing (1) that is configured in accordance with one of the preceding claims.

14. A construction machine in accordance with the preceding claim, wherein the multirow roller bearing (1) supports a slewing platform of the construction machine rotatably about an upright axis at an undercarriage of the construction machine.

15. A wind turbine having a rotor that has a plurality of rotor blades adjustably supported at a hub, wherein at least one multirow roller bearing (1) that is configured in accordance with one of the preceding claims is provided to support a rotor blade at the hub or to support the hub at a nacelle of the wind turbine.

## Revendications

1. Palier à roulement à plusieurs rangées, en particulier palier à roulement de grande dimension à centre ouvert, avec une bague intérieure (2) et une bague extérieure (3) ainsi qu'au moins deux rangées de palier à roulement axiales (8, 9) destinées à supporter des forces axiales entre la bague intérieure et la bague extérieure, les deux rangées de palier à roulement axiales (8, 9) reposant sur des côtés axiaux opposés d'un talon annulaire (4) faisant saillie dans le sens radial, lequel vient en prise dans une rainure annulaire (5) et est supporté au niveau de la rainure annulaire (5) par lesdites rangées de palier à roulement axiales (8, 9), les deux rangées de palier à roulement axiales (8, 9) étant réalisées sous la forme de paliers à rouleaux obliques avec un angle d'obliquité (a) supérieur à 0° et au maximum de 45°,
**caractérisé en ce que** les rangées de palier à roulement axiales (8, 9) sont inclinées de telle manière que les rangées de palier à roulement axiales (8, 9) agissent contre un retrait radial du talon annulaire (4) hors de la rainure annulaire (5), un palier radial (11) séparé, qui agit contre un rapprochement radial de la bague extérieure (3) vers la bague intérieure (2), étant disposé entre un côté frontal du talon annulaire (4) et un fond de la rainure annulaire (5) approximativement au milieu entre les rangées de palier à roulement axiales (8, 9).

2. Palier à roulement à plusieurs rangées selon la revendication précédente, dans lequel ledit angle d'obliquité (a) est réalisé dans une plage comprise entre plus de 0° et au maximum 10° ou dans une plage comprise entre 1° et 8°.

3. Palier à roulement à plusieurs rangées selon la revendication 1, dans lequel ledit angle d'obliquité (a) est réalisé dans une plage comprise entre 10° et 35° ou entre 15° et 30°.

4. Palier à roulement à plusieurs rangées selon l'une des revendications précédentes, dans lequel les deux ou toutes les rangées de palier à roulement axiales (8, 9) sont réalisées sous la forme de paliers à rouleaux obliques avec des angles d'obliquité (a) de même valeur.

5. Palier à roulement à plusieurs rangées selon l'une des revendications précédentes, dans lequel exactement une rangée de palier radial (11) est prévue.

6. Palier à roulement à plusieurs rangées selon l'une des revendications précédentes, dans lequel les organes de roulement (10) des rangées de palier à roulement axiales (8, 9) sont réalisés sous la forme de rouleaux cylindriques, les rangées de palier à roulement axiales (8, 9) étant disposées en alignement axial l'une avec l'autre et/ou possédant le même diamètre de palier, et possédant des organes de roulement (10) de même diamètre et présentant des angles de pression de même valeur.

7. Palier à roulement à plusieurs rangées selon l'une des revendications précédentes, dans lequel un angle (β) entre un chemin de roulement axial (4a, 4b ; 5a, 5b) sur le talon annulaire (4) ou la rainure annulaire (5) et une surface d'arrêt latérale adjacente pour les organes de roulement (10) des rangées de palier à roulement axiales (8, 9) est de 90° ou moins.

8. Palier à roulement à plusieurs rangées selon l'une des revendications précédentes, dans lequel au moins une desdites bague intérieure ou bague extérieure (2, 3) est pourvue d'une denture (7), la bague de palier pourvue du talon annulaire (6) comportant en particulier ladite denture (8).

9. Palier à roulement à plusieurs rangées selon l'une des revendications précédentes, dans lequel le talon annulaire (4) est prévu sur la bague extérieure (3) et la rainure annulaire (5) est prévue sur la bague intérieure (2).

10. Palier à roulement à plusieurs rangées selon l'une des revendications précédentes, dans lequel la bague de palier comportant la rainure annulaire (5) est réalisée en deux parties ou plus et possède un plan de joint (6), qui s'étend approximativement perpendiculairement à l'axe de rotation du palier à roulement et divise la rainure annulaire (5) dans la zone du fond de la rainure annulaire (5).

11. Palier à roulement à plusieurs rangées selon l'une des revendications précédentes, dans lequel le palier à roulement (1) est réalisé sous la forme d'un palier à roulement de grande dimension avec un diamètre de bague supérieur à 1 m ou supérieur à 2,5 m ou supérieur à 4 m.

12. Palier à roulement à plusieurs rangées selon l'une des revendications précédentes, dans lequel au moins une de la bague intérieure et la bague extérieure (2 ; 3) est réalisée de manière segmentée.

13. Machine de chantier, en particulier grue ou excavatrice, comprenant un palier à roulement (1) à plusieurs rangées, qui est réalisé selon l'une des revendications précédentes.

14. Machine de chantier selon la revendication précédente, dans laquelle le palier à roulement (1) à plusieurs rangées supporte une tourelle de la machine de chantier de manière rotative sur un axe vertical, sur un châssis inférieur de la machine de chantier.

15. Éolienne comprenant un rotor, qui comporte plusieurs pales de rotor montées de manière réglable sur un moyeu, dans laquelle au moins un palier à roulement (1) à plusieurs rangées, qui est réalisé selon l'une des revendications précédentes, est prévu pour le support d'une pale de rotor sur le moyeu ou pour le support du moyeu sur une nacelle de l'éolienne.
